(19) Europäisches Patentamt
European Patent Office
Office européen des brevets

(11) **EP 4 637 231 A1**

(12) **EUROPEAN PATENT APPLICATION**
published in accordance with Art. 153(4) EPC

(43) Date of publication:
**22.10.2025 Bulletin 2025/43**

(21) Application number: **23909987.2**

(22) Date of filing: **05.12.2023**

(51) International Patent Classification (IPC):
**H04W 64/00** $^{(2009.01)}$

(52) Cooperative Patent Classification (CPC):
**H04L 27/00; H04W 64/00; H04W 72/0453**

(86) International application number:
**PCT/CN2023/136407**

(87) International publication number:
**WO 2024/140057 (04.07.2024 Gazette 2024/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.12.2022 CN 202211724557**

(71) Applicant: **Huawei Technologies Co., Ltd.
Shenzhen, Guangdong 518129 (CN)**

(72) Inventors:
- **LI, Shuai
  Shenzhen, Guangdong 518129 (CN)**
- **WU, Yiling
  Shenzhen, Guangdong 518129 (CN)**
- **LU, Zhenwei
  Shenzhen, Guangdong 518129 (CN)**
- **QU, Weilin
  Shenzhen, Guangdong 518129 (CN)**

(74) Representative: **Thun, Clemens
Mitscherlich PartmbB
Patent- und Rechtsanwälte
Karlstraße 7
80333 München (DE)**

(54) **COMMUNICATION METHOD AND COMMUNICATION APPARATUS**

(57)    A communication method and a communication apparatus are provided. The communication method includes: A terminal device receives a carrier signal, and sends a first signal. A spacing between a first frequency in a frequency band of the first signal and a center frequency of a carrier bandwidth is greater than or equal to a first frequency spacing. The first frequency is a frequency having a smallest frequency spacing from the center frequency of the carrier bandwidth in the frequency band of the first signal. The spacing between the first frequency and the center frequency of the carrier bandwidth is greater than or equal to the first frequency spacing, which means that the first frequency in the frequency band of the first signal is far away from the center frequency of the carrier bandwidth. Therefore, phase noise of the carrier signal is low in the frequency band of the first signal. According to this communication method, impact of the phase noise of the carrier signal on the first signal can be reduced.

FIG. 8

**Description**

CROSS-REFERENCE TO RELATED APPLICATION

This application claims priority to Chinese Patent Application No. 202211724557.0, filed with the China National Intellectual Property Administration on December 30, 2022 and entitled "COMMUNICATION METHOD AND COMMUNICATION APPARATUS", which is incorporated herein by reference in its entirety.

TECHNICAL FIELD

This application relates to the field of positioning technologies, and in particular, to a communication method and a communication apparatus.

BACKGROUND

There may be a terminal device and at least two network devices in a network. The at least two network devices may separately send carrier signals to the terminal device, to provide energy for the terminal device to send a signal. The terminal device sends the signal based on the received carrier signals. In this way, in addition to receiving the signal from the terminal device, one of the at least two network devices may further receive a carrier signal sent by another network device. For the network device, compared with the signal of the terminal device, the carrier signal is an interference signal, which causes extra phase noise. Consequently, a signal to interference plus noise ratio of the signal received by the network device is low, and demodulation performance or detection performance of the network device for the received signal is reduced.

SUMMARY

This application provides a communication method and a communication apparatus, to reduce impact of phase noise of a carrier signal.

According to a first aspect, an embodiment of this application provides a communication method. The method may be performed by a first communication apparatus. The first communication apparatus may be a communication device or a communication apparatus, for example, a chip system, that can support the communication device in implementing a function needed by the method. For example, the first communication apparatus is a label, or a chip disposed in the label, or another component configured to implement a function of the label. For ease of description, the following uses an example in which the first communication apparatus is the label for description.

The communication method includes: A label receives a carrier signal, and sends a first signal. A spacing between a first frequency in a frequency band of a first signal and a center frequency of a carrier bandwidth is greater than or equal to a first frequency spacing. The first frequency is a frequency having a smallest frequency spacing from the center frequency of the carrier bandwidth in the frequency band of the first signal.

The spacing between the first frequency in the frequency band of the first signal and the center frequency of the carrier bandwidth is greater than or equal to the first frequency spacing. To be specific, the first frequency in the frequency band of the first signal is far away from the center frequency of the carrier bandwidth. A frequency location of a signal is farther away from the center frequency of the carrier signal, which indicates that phase noise of the signal is lower. Therefore, the spacing between the first frequency in the frequency band of the first signal and the center frequency of the carrier bandwidth is greater than or equal to the first frequency spacing, so that the phase noise of the carrier signal in the frequency band of the first signal may be low, to reduce impact of the phase noise of the carrier signal on the first signal.

In an implementation, a bandwidth of the first signal is less than or equal to an absolute value of a difference between a half of the carrier bandwidth and the first frequency spacing. The bandwidth of the first signal is configured, so that the spacing between the first frequency in the frequency band of the first signal and the center frequency of the carrier bandwidth may be greater than or equal to the first frequency spacing.

In an implementation, a frequency spacing F between a center frequency of the first signal and a center frequency of a downlink carrier signal and a modulation data rate S used for sending the first signal satisfy: an absolute value of F-S is greater than or equal to the first frequency spacing. F and S are configured, to adjust the frequency band and a frequency offset of the first signal, so that the spacing between the first frequency in the frequency band of the first signal and the center frequency of the carrier bandwidth may be greater than or equal to the first frequency spacing.

In an implementation, F satisfies: $F=1/T/R_{bit}$, and S satisfies $S=1/T/R_{bit}/M$, where T is level duration of one symbol of the first signal, $R_{bit}$ is a bit repetition count used for the first signal, and M is a Manchester encoding repetition count used for the first signal.

In an implementation, the first signal is a positioning reference signal. The solutions provided in embodiments of this application may be applied to positioning, for example, applied to positioning based on an angle of arrival (angle of arrival, AOA). Because the phase noise of the carrier signal in the frequency band of the first signal is low, impact of the phase noise of the carrier signal on the first signal can be reduced, and positioning performance can be improved.

In an implementation, the method further includes: A label sends a data signal. A bandwidth of the data signal is greater than a positioning reference signal bandwidth, and a center frequency of the bandwidth of the data signal is the same as a center frequency of the positioning reference signal bandwidth; or a center frequency of the bandwidth of the data signal is different from a center frequency of the positioning reference signal bandwidth, a distance between a first frequency in the positioning reference signal bandwidth and the center frequency of the carrier bandwidth is greater than a distance between a second frequency in the bandwidth of the data signal and the center frequency of the carrier bandwidth, and the second frequency is a frequency that is in the bandwidth of the data signal and that is closest to the center frequency of the carrier bandwidth.

When the data signal and the first signal are independent signals, in addition to sending the first signal, the label may further send the data signal. In this case, a network device may separately configure the bandwidth of the first signal and the bandwidth of the data signal. For example, the bandwidth of the data signal is greater than the bandwidth of the first signal, and the center frequency of the bandwidth of the data signal is the same as a center frequency of the bandwidth of the first signal. In this way, impact of the phase noise of the carrier signal on the first signal can be reduced. In addition, the data signal may be transmitted at a higher rate, to improve data transmission efficiency. Alternatively, the center frequency of the bandwidth of the data signal is different from a center frequency of the bandwidth of the first signal, but the distance between the first frequency in the bandwidth of the first signal and the center frequency of the carrier bandwidth is greater than the distance between the second frequency in the bandwidth of the data signal and the center frequency of the carrier bandwidth, so that impact of the phase noise of the data signal on the first signal can also be reduced.

In an implementation, the label sends the first signal by using a first bit repetition count and a first Manchester encoding repetition count, and the label sends the data signal by using a second bit repetition count and a second Manchester encoding repetition count. The first bit repetition count is different from the second bit repetition count; and/or the first Manchester encoding repetition count is different from the second Manchester encoding repetition count.

In the foregoing implementation, the network device configures different bit repetition counts and/or Manchester encoding repetition counts for the first signal and the data signal that are sent by the label, so that the phase noise of the data signal in the frequency band of the first signal is low, to reduce the impact of the phase noise of the data signal on the first signal.

According to a second aspect, an embodiment of this application provides a communication method. The method may be performed by a second communication apparatus. A first communication apparatus may be a communication device or a communication apparatus, for example, a chip system, that can support the communication device in implementing a function needed by the method. For example, the second communication apparatus is a network device, a chip disposed in the network device, or another component configured to implement a function of the network device. For ease of description, the following uses an example in which the first communication apparatus is the network device for description.

The communication method includes: The network device sends a carrier signal, and receives a first signal. A spacing between a first frequency in a frequency band of the first signal and a center frequency of a carrier bandwidth is greater than or equal to a first frequency spacing. The first frequency is a frequency having a smallest frequency spacing from the center frequency of the carrier bandwidth in the frequency band of the first signal.

In an implementation, phase noise of the carrier signal in the frequency band of the first signal is less than a first threshold. The first threshold is a power threshold of the phase noise.

In an implementation, the first signal is a positioning reference signal. The first threshold is related to positioning precision. Optionally, the first threshold is determined based on a minimum signal to interference plus noise ratio (signal to interference plus noise ratio, SINR) corresponding to target positioning precision.

In an implementation, the first frequency spacing is determined based on a phase noise power of signal leakage.

In an implementation, a frequency spacing F between a center frequency of the first signal and a center frequency of a downlink carrier signal and a modulation data rate S used for sending the first signal satisfy: an absolute value of F-S is greater than or equal to the first frequency spacing.

In an implementation, F satisfies: $F=1/T/R_{bit}$, and S satisfies $S=1/T/R_{bit}/M$, where T is level duration of one symbol of the first signal, $R_{bit}$ is a bit repetition count used for the first signal, and M is a Manchester encoding repetition count used for the first signal.

In an implementation, the method further includes: A network device receives a data signal. A bandwidth of the data signal is greater than a bandwidth of the first signal, and a center frequency of the bandwidth of the data signal is the same as a center frequency of the bandwidth of the first signal; or a center frequency of the bandwidth of the data signal is different from a center frequency of the bandwidth of the first signal, a distance between the first frequency in the bandwidth of the first signal and the center frequency of the carrier bandwidth is greater than a distance between a second frequency in the bandwidth of the data signal and the center frequency of the carrier bandwidth, and the second frequency is a frequency having a smallest frequency spacing from the center frequency of the carrier bandwidth in the bandwidth of the data signal.

In an implementation, the first signal corresponds to a first bit repetition count and a first Manchester encoding repetition count, and the data signal corresponds to a second bit repetition count and a second Manchester encoding repetition count. The first bit repetition count is different from the second bit repetition count; and/or the first Manchester encoding repetition count is different from the second Manchester encoding repetition count.

For technical effects brought by the second aspect and the possible implementations of the second aspect, refer to the descriptions of the technical effects of the first aspect and the possible implementations of the first aspect.

According to a third aspect, an embodiment of this application provides a communication apparatus. The communication apparatus has a function of implementing behavior in the method embodiment of the first aspect. For beneficial effects, refer to the descriptions of the first aspect. Details are not described herein again. The communication apparatus may be the label in the first aspect, or the communication apparatus may be an apparatus, for example, a chip or a chip system, that can implement the method provided in the first aspect.

In a possible design, the communication apparatus includes a corresponding means (means) or module configured to perform the method in the first aspect. For example, the communication apparatus includes a processing unit (or referred to as a processing module or a processor sometimes) and/or a transceiver unit (or referred to as a transceiver module or a transceiver sometimes). Such units (modules) may perform corresponding functions in the method examples in the first aspect.

For example, the transceiver module is configured to receive a carrier signal. The processing module is configured to determine a frequency band of a first signal. The transceiver module is further configured to send a positioning reference signal in the frequency band of the first signal. A spacing between a first frequency in the frequency band of the first signal and a center frequency of a carrier bandwidth is greater than or equal to a first frequency spacing. The first frequency is a frequency having a smallest frequency spacing from the center frequency of the carrier bandwidth in the frequency band of the first signal. For details, refer to detailed descriptions in the method example. Details are not described herein again.

According to a fourth aspect, an embodiment of this application provides a communication apparatus. The communication apparatus has a function of implementing behavior in the method embodiment of the second aspect. For beneficial effects, refer to the descriptions of the second aspect. Details are not described herein again. The communication apparatus may be the network device in the second aspect, or the communication apparatus may be an apparatus, for example, a chip or a chip system, that can implement the method provided in the second aspect.

In a possible design, the communication apparatus includes a corresponding means (means) or module configured to perform the method in the second aspect. For example, the communication apparatus includes a processing unit (or referred to as a processing module or a processor sometimes) and/or a transceiver unit (or referred to as a transceiver module or a transceiver sometimes). Such units (modules) may perform corresponding functions in the method examples in the second aspect.

For example, the transceiver module is configured to send a carrier signal, and receive a positioning reference signal in a frequency band of a first signal. The processing module is configured to determine the frequency band of the first signal. A spacing between a first frequency in the frequency band of the first signal and a center frequency of a carrier bandwidth is greater than or equal to a first frequency spacing. The first frequency is a frequency having a smallest frequency spacing from the center frequency of the carrier bandwidth in the frequency band of the first signal. For details, refer to detailed descriptions in the method example. Details are not described herein again.

According to a fifth aspect, an embodiment of this application provides a communication apparatus. The communication apparatus may be the communication apparatus in any one of the first aspect or the second aspect in the foregoing embodiments, or a chip or a chip system disposed in the communication apparatus in any one of the first aspect or the second aspect. The communication apparatus includes a communication interface and a processor, and optionally, further includes a memory. The memory is configured to store a computer program. The processor is coupled to the memory and the communication interface. When the processor reads the computer program or instructions, the communication apparatus is caused to perform the method performed by the label or the network device in the foregoing method embodiments.

The communication interface in the communication apparatus in the fifth aspect may be a transceiver in the communication apparatus, for example, implemented by using an antenna, a feeder, and a codec in the communication apparatus. Alternatively, if the communication apparatus is a chip disposed in the communication apparatus, the communication interface may be an input/output interface of the chip, for example, an input/output pin.

According to a sixth aspect, an embodiment of this application provides a communication apparatus. The communication apparatus includes an input/output interface and a logic circuit. The input/output interface is configured to input and/or output information. The logic circuit is configured to perform the method in any one of the first aspect or the second aspect.

According to a seventh aspect, an embodiment of this application provides a chip system. The chip system includes a processor and may further include a memory and/or a communication interface, and is configured to implement the method in any one of the first aspect and the second aspect. In a possible implementation, the chip system further includes the memory, configured to store a computer program. The chip system may include a chip, or may include a chip and another discrete component.

According to an eighth aspect, an embodiment of this application provides a communication system, where the communication system includes a label and a network device, the label is configured to perform the method performed by the label in the first aspect, and the network device is configured to perform the method performed by the network device in the second aspect. Alternatively, the communication system may further include more labels and/or more network devices.

According to a ninth aspect, this application provides a computer-readable storage medium. The computer-readable storage medium stores a computer program. When the computer program is run, the method in any one of the first aspect and the second aspect is implemented.

According to a tenth aspect, a computer program product is provided. The computer program product includes computer program code. When the computer program code is run, the method in any one of the first aspect and the second aspect is performed.

For beneficial effects of the third aspect to the tenth aspect and the implementations thereof, refer to descriptions of beneficial effects of the method in the first aspect and the implementations thereof.

BRIEF DESCRIPTION OF DRAWINGS

FIG. 1 is a diagram of positioning based on an AOA;
FIG. 2 is a flowchart of a first positioning scenario according to an embodiment of this application;
FIG. 3 is a flowchart of a second positioning scenario according to an embodiment of this application;
FIG. 4 is a flowchart of a third positioning scenario according to an embodiment of this application;
FIG. 5 is a flowchart of a fourth positioning scenario according to an embodiment of this application;
FIG. 6 is a diagram (single sideband modulation) of a frequency band of a positioning reference signal according to an embodiment of this application;
FIG. 7 is a diagram (double sideband modulation) of a frequency band of a positioning reference signal according to an embodiment of this application;
FIG. 8 is a schematic flowchart of a communication method according to an embodiment of this application;
FIG. 9 is a diagram of a bandwidth of the data signal and a positioning reference signal bandwidth according to an embodiment of this application;
FIG. 10 is a configuration diagram of an uplink carrier and a downlink carrier according to an embodiment of this application;
FIG. 11 is another configuration diagram of an uplink carrier and a downlink carrier according to an embodiment of this application;
FIG. 12 is a diagram of a structure of a communication apparatus according to an embodiment of this application; and
FIG. 13 is a diagram of another structure of a communication apparatus according to an embodiment of this application.

DESCRIPTION OF EMBODIMENTS

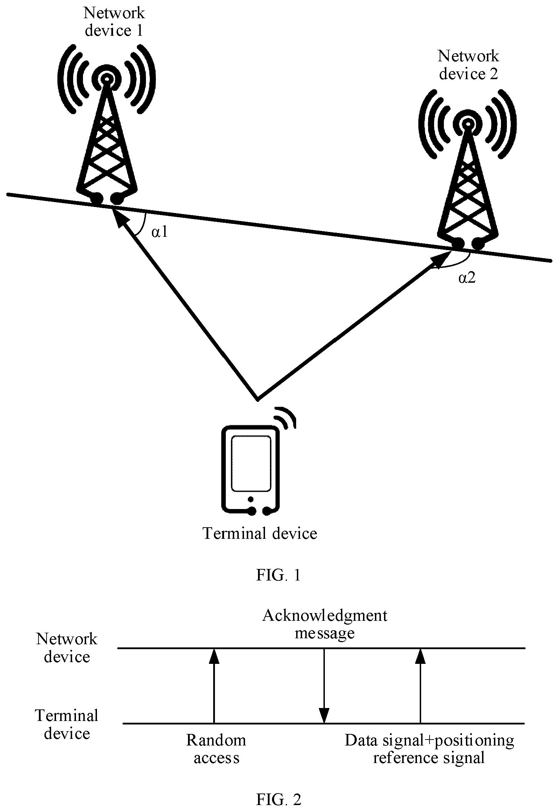

In an architecture shown in FIG. 1, in addition to receiving a signal from a terminal device, any network device may further receive a signal sent by another network device. For example, a network device 1 may receive the signal (for example, referred to as a first signal) from the terminal device and a carrier signal from a network device 2. The carrier signal may be used for reflection (backsatter) communication, to provide energy for transmission from the terminal device to the network device. For the network device 1, compared with the first signal of the terminal device, the carrier signal of the network device 2 is an interference signal, and causes extra phase noise. In this case, a signal to interference plus noise ratio of the signal received by the network device 1 is low. In this way, demodulation performance or detection performance of the network device for the signal sent by the terminal device is reduced.

In view of this, the technical solutions provided in embodiments of this application are proposed. According to the solutions provided in embodiments of this application, phase noise generated by the carrier signal in a frequency band range of the first signal sent by the terminal device is low, thereby improving a signal to interference plus noise ratio of a signal received by a receiving end, and facilitating demodulation or detection of the first signal.

The technical solutions provided in embodiments of this application may be applied to various communication systems, for example, a long term evolution (long term evolution, LTE) system, a 5th generation mobile communication technology (5th generation mobile communication technology, 5G) system, namely, a new radio (new radio, NR) system, or a next generation communication system, such as a 6G system. Certainly, the technical solutions in embodiments of this application may also be applied to another communication system, provided that the communication system has a positioning requirement for a terminal. For example, the technical solutions provided in embodiments of this application may also be applied to an internet of things (internet of things, IoT) system, a narrowband internet of things (narrowband internet of things, NB-IoT) system, or the like, for example, wireless fidelity (wireless fidelity, Wi-Fi)-based IoT or a wearable Wi-Fi network. The wearable Wi-Fi network may be a Wi-Fi network formed by using a terminal device (for example, a mobile phone) as a virtual access point and an associated wearable device.

The system described in embodiments of this application is intended to describe the technical solutions in embodiments of this application more clearly, but constitutes no limitation on the technical solutions provided in embodiments of this application. For example, the signal (referred to as the first signal in embodiments of this application) sent by the terminal device is a positioning reference signal. Embodiments of this application are applicable to a positioning system based on an angle of arrival (angle of arrival, AOA) shown in FIG. 1. Positioning based on the AOA means that at least two network devices participating in positioning of the terminal device measure the positioning reference signal sent by the terminal device, to obtain AOAs, and then a location of the terminal may be positioned based on an intersection point of rays transmitted by the network devices on the corresponding AOAs. To better understand the solutions provided in embodiments of this application, related content of positioning based on the AOA is first described.

An example in which the at least two network devices participating in positioning of the terminal device are the network device 1 and the network device 2 in FIG. 1 is used. As shown in FIG. 1, an angle at which a positioning reference signal sent by the terminal device arrives at the network device 1 is $\alpha 1$, and an angle at which a positioning reference signal sent by the terminal device arrives at the network device 2 is $\alpha 2$. A ray transmitted at $\alpha 1$ by using the network device 1 as a start point needs to pass through the terminal device, and a ray transmitted at $\alpha 2$ by using the network device 2 as a start point also needs to pass through the terminal device. Therefore, an intersection point of the rays transmitted by the network device 1 and the network device 2 at corresponding AOAs is the location of the terminal device. According to the solutions in embodiments of this application, the phase noise generated by the carrier signal in a frequency band range of the positioning reference signal sent by the terminal device is low, thereby improving the signal to interference plus noise ratio of the signal received by the receiving end, facilitating demodulation of the positioning reference signal by a first network device, and improving positioning performance.

In embodiments of this application, the positioning reference signal may be a positioning-dedicated signal. In this case, in addition to sending the positioning reference signal, the terminal device may further send a data signal. Alternatively, a data signal sent by the terminal device may be used for positioning of the terminal device. In this case, there is no need to define the positioning-dedicated signal. In a scenario, the first network device may trigger the terminal device to send the positioning reference signal or the data signal, to perform positioning on the terminal device. In another scenario, the terminal device may send the positioning reference signal or the data signal to the network device when accessing the network device, and the network device may perform positioning on the terminal device based on the received data signal or the received positioning reference signal. For ease of description, a procedure in which the network device triggers the terminal device to send the positioning reference signal or the data signal, to perform positioning on the terminal device is referred to as a positioning procedure of a first type. Correspondingly, a procedure in which the terminal device may send the positioning reference signal or the data signal to the network device when accessing the network device, and the network device performs positioning on the terminal device based on the received data signal or the received positioning reference signal is referred to as a positioning procedure of a second type. According to whether the positioning reference signal is defined and a type of a positioning procedure, the following four positioning scenarios may be included.

FIG. 2 shows a procedure in a first positioning scenario. In the first positioning scenario, the positioning reference signal is defined, and a positioning procedure is the positioning procedure of the second type. As shown in FIG. 2, the terminal device accesses the network device through a random access procedure, and the network device sends an acknowledgment message to the terminal device. The terminal device receives the acknowledgment message sent by the network device, and sends a positioning reference signal and a data signal to the network device. The data signal may carry related information of the terminal device, for example, an identifier (ID) of the terminal device. The network device performs positioning on the terminal device based on the received positioning reference signal.

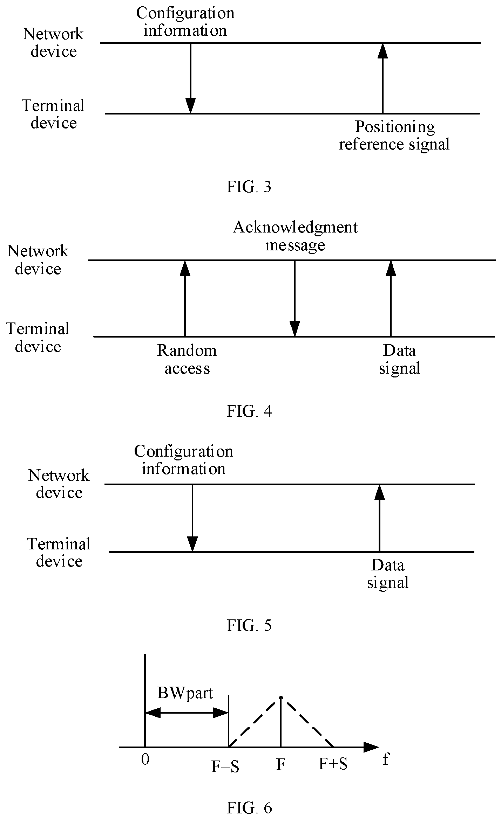

FIG. 3 shows a procedure in a second positioning scenario. In the second positioning scenario, the positioning reference signal is defined, and a positioning procedure is the positioning procedure of the first type. As shown in FIG. 3, the network device triggers the terminal device to send a positioning reference signal. For example, the network device configures, for the terminal device, configuration information used for sending of the positioning reference signal. The terminal device sends the positioning reference signal to the network device in response to trigger of the network device. The terminal device accesses the network device through a random access procedure, and the network device sends an acknowledgment message to the terminal device. The network device performs positioning on the terminal device based on the received positioning reference signal.

FIG. 4 shows a procedure in a third positioning scenario. In the third positioning scenario, there is no positioning reference signal, and a positioning procedure is the positioning procedure of the second type. As shown in FIG. 4, the terminal device accesses the network device through a random access procedure, and the network device sends an acknowledgment message to the terminal device. The terminal device receives the acknowledgment message sent by the network device, and sends a data signal to the network device. The data signal may carry related information of the terminal device, for example, an identifier (ID) of the terminal device. The network device performs positioning on the terminal device based on the received data signal.

FIG. 5 shows a procedure in a fourth positioning scenario. In the fourth positioning scenario, there is no positioning reference signal, and a positioning procedure is the positioning procedure of the first type. As shown in FIG. 5, the network device triggers the terminal device to send a positioning reference signal. For example, the network device configures, for the terminal device, configuration information used for sending of the data signal. The terminal device sends the data signal to the network device in response to trigger of the network device. The network device performs positioning on the terminal device based on the received data signal.

In embodiments of this application, the terminal device is a device with a wireless transceiver function, and may send a signal to the network device, or receive a signal from the network device. The terminal device may include user equipment (user equipment, UE), and is sometimes referred to as a terminal, a terminal apparatus, an access station, a UE station, a remote station, a wireless communication device, a user apparatus, or the like. The terminal device is configured to connect people, things, machines, and the like, and may be widely used in various scenarios, for example, including but not limited to the following scenarios: cellular communication, device to device (device to device, D2D), vehicle to everything (vehicle to everything, V2X), machine-to-machine/machine-type communication (machine-to-machine/machine-type communication, M2M/MTC), IoT, virtual reality (virtual reality, VR), augmented reality (augmented reality, AR), industrial control (industrial control), self-driving (self-driving), remote medical (remote medical), a smart grid (smart grid), smart furniture, smart office, smart wearable, smart transportation, a smart city (smart city), an uncrewed aerial vehicle, and a robot.

The terminal device may alternatively be a label, a Bluetooth module, or a device provided with a Bluetooth module. The terminal device may alternatively be a wearable device. The wearable device may also be referred to as a wearable intelligent device, an intelligent wearable device, or the like, and is a general term of wearable devices that are intelligently designed and developed for daily wear by using a wearable technology, for example, glasses, gloves, watches, clothes, and shoes.

If the various terminal devices described above are located in a vehicle (for example, placed in the vehicle or installed in the vehicle), the terminal devices may be all considered as vehicle-mounted terminal devices. For example, the vehicle-mounted terminal device is also referred to as an on-board unit (on-board unit, OBU). The terminal device in embodiments of this application may alternatively be a vehicle-mounted module, a vehicle-mounted component, a vehicle-mounted chip, or a vehicle-mounted unit that is built in a vehicle as one or more components or units. The vehicle may implement a method in this application by using the built-in vehicle-mounted module, vehicle-mounted component, vehicle-mounted chip, or vehicle-mounted unit.

In embodiments of this application, the communication apparatus configured to implement a function of the terminal device may be the terminal device, or may be an apparatus that can support the terminal device in implementing the function. For example, the apparatus may be a chip system, and is installed in the terminal device. For ease of description, in embodiments of this application, an example in which the apparatus configured to implement the function of the terminal device is the terminal device is used, to describe the technical solutions provided in embodiments of this application.

In embodiments of this application, the network device may be an access device through which the terminal device accesses a mobile communication system in a wireless manner, for example, includes an access network (access network, AN) device, for example, a base station. The network device may alternatively be a device that communicates with a terminal device through an air interface. The network device may include an evolved NodeB (evolved NodeB, eNB/e-NodeB) in an LTE system or a long term evolution-advanced (long term evolution-advanced, LTE-A) system. The network device may alternatively include a next generation NodeB (next generation NodeB, gNB) in an NR system. The network device may alternatively include an access node or the like in a wireless-fidelity (wireless-fidelity, Wi-Fi) system. The network device may alternatively be a station (station), a relay station, a vehicle-mounted device, a future evolved public land mobile network (Public Land Mobile Network, PLMN) device, a device in a D2D network, a device in an M2M network, a device in an internet of things IoT network, a network device in a PLMN network, or the like. A specific technology and a specific device form that are used by the network device are not limited in embodiments of this application.

In addition, the base station may include a central unit (centralized unit, CU) and a distributed unit (distributed unit, DU), and a plurality of DUs may be controlled by one CU in a central manner. The CU and the DU may be divided based on a protocol layer function that the CU and the DU each have in a wireless network. For example, functions of a packet data convergence protocol (packet data convergence protocol, PDCP) layer and a protocol layer above the packet data convergence protocol layer are set on the CU, and functions of protocol layers below the PDCP layer, for example, a radio link control (radio link control, RLC) layer and a media access control (media access control, MAC) layer, are set on the DU. It should be noted that such protocol layer division is merely an example, and division may alternatively be performed at another protocol layer. A radio frequency apparatus may be remotely deployed and not placed in the DU, or may be integrated into the DU, or may be partially remotely disposed and partially integrated into the DU. This is not limited in embodiments of this application. In addition, in some embodiments, a control plane (control plane, CP) and a user plane (user plane, UP) of the CU may be separated into different entities for implementation, where the entities are respectively a control-plane CU entity (CU-CP entity) and a user-plane CU entity (CU-UP entity). The control plane CU-CP of the CU further includes a further division architecture. In other words, an existing CU-CP is further divided into a CU-CP 1 and a CU-CP 2. The CU-CP 1 includes various radio resource management functions, and the CU-CP 2 includes only a radio resource control (radio resource control, RRC) function and a PDCP-C function (namely, a basic function of control plane signaling at the PDCP layer).

In embodiments of this application, the communication apparatus configured to implement a function of the network device may be the network device, or may be an apparatus that can support the network device in implementing the function. For example, the apparatus is a chip system, and is installed in the network device. For ease of description, in embodiments of this application, an example in which the apparatus configured to implement the function of the network device is the network device is used, to describe the technical solutions provided in embodiments of this application.

The following explains and describes some terms in embodiments of this application.

(1) A carrier (carrier) bandwidth is also referred to as a system bandwidth, and may also be represented by a transmission bandwidth of a carrier. A network device may configure one or more carriers. Correspondingly, transmission bandwidths corresponding to the one or more carriers configured by the network device may be understood as system bandwidths. For example, if one network device configures one carrier, and a transmission bandwidth of the carrier is 100 MHz (megahertz), it may be considered that the system bandwidth is 100 MHz. For another example, if one network device configures five carriers, and a transmission bandwidth of each carrier is 20 MHz, it may also be considered that the system bandwidth is 100 MHz.

(2) Channel bandwidth: A channel bandwidth of the terminal device supports a single NR radio frequency carrier in an uplink or a downlink of the terminal device. From a perspective of the network device, channel bandwidths of different terminal devices may be supported in a same spectrum, to send information to and/or receive information from the terminal device connected to the network device. Transmission of a plurality of carriers to a same terminal device (carrier) or transmission of a plurality of carriers to different terminal devices in a channel bandwidth of the network device may be supported. From a perspective of the UE, one or more bandwidth parts (bandwidth parts, BWPs)/carriers may be configured for the terminal device, and each carrier has its own terminal device channel bandwidth. The terminal device does not need to know a network device channel bandwidth, or how the network device allocates bandwidths to different terminal devices. The terminal device channel bandwidth of each carrier of the terminal device is flexibly configured, but can only be completely configured in the network device channel bandwidth.

(3) A frequency band of the positioning reference signal is a segment of contiguous frequency domain resources in frequency domain, and may include a plurality of carriers used for transmission of the positioning reference signal.

(4) A frequency band of the data signal is a segment of contiguous frequency domain resources in frequency domain, and may include a plurality of carriers used for transmission of the data signal.

(5) Manchester (Manchester) encoding, also referred to as split phase code, synchronization code, or phase encoding, is an encoding method in which a level jump is used to represent 1 or 0. Each code element of Manchester encoding is represented by two level signals with different phases, namely, a square wave of a cycle. Phases of the code 0 and the code 1 are opposite. A Manchester encoding repetition count M is a parameter of Manchester encoding.

For example, an input bit sequence is $g_0$, $g_1$, $g_2$, $g_3$, ... , and $g_{G-1}$, and after Manchester encoding, an output bit sequence is $h_0$, $h_1$, $h_2$, $h_3$, ... , and $h_{H-1}$, where $H = 2M \cdot G$. M is a Manchester encoding repetition count. Manchester encoding pseudocode is as follows:

$$\text{for } k = 0 \text{ to } G - 1$$

$$\text{if } g_k = 0$$

$$\text{for } j = 0 \text{ to } M - 1$$

$$h_{2Mk+2j} = 0, h_{2Mk+2j+1} = 1$$

$$\text{End for}$$

$$\text{Else}$$

$$\text{for } j = 0 \text{ to } M - 1$$

$$h_{2Mk+2j} = 1, h_{2Mk+2j+1} = 0$$

$$\text{End for}$$

$$\text{End if}$$

$$\text{End for}$$

For example, when M=1, an original bit 0 is encoded as 01, and an original bit 1 is encoded as 10.

As another parameter of Manchester encoding, a bit repetition count R is a binary number with input bits 0 and 1, and may be used to determine a set of output bits. For example, an original bit a(i) is mapped as R bits, and b(iR), b(iR + 1), ... , and b(iR + R - 1). A set of bits to be output may be determined according to the following formula: b(iR + k) = a(i), where k = 0,1, ..., and R - 1. For example, R=2, the original bit 0 is changed to 00, and the original bit 1 is changed to 11.

(6) The terms "system" and "network" in embodiments of this application may be used interchangeably. In embodiments of this application, "a plurality of" may also be understood as "at least two". "At least one" may be understood as one or more, for example, one, two, or more. For example, "include at least one" means "include one, two, or more", and there is no limitation on which is included. For example, "include at least one of A, B, and C" may mean "include A, B, or C", "include A and B, A and C, or B and C", or "include A, B, and C". The term "and/or" describes an association relationship for describing associated objects and represents that three relationships may exist. For example, A and/or B may represent the following three cases: Only A exists, both A and B exist, and only B exists. In addition, the character "/" generally indicates an "or" relationship between the associated objects.

In embodiments of this application, "example", "in some embodiments", "in another embodiment", and the like are used to represent giving an example, an illustration, or a description. Any embodiment or design scheme described as an "example" in this application should not be explained as being more preferred or having more advantages than another embodiment or design scheme. Exactly, the term "example" is for presenting a concept in a specific manner.

Unless otherwise specified, ordinal numbers such as "first" and "second" in embodiments of this application are used to distinguish between a plurality of objects, and are not intended to limit a sequence, a time sequence, priorities, or importance of the plurality of objects. For example, a first bit repetition count and a second bit repetition count are merely used to distinguish between different bit repetition counts, but are not used to limit functions, priorities, or importance of the two second bit repetition counts. In embodiments of this application, unless otherwise specified, "if" may be replaced with "if", and "in a case" may be replaced with "when".

Embodiments of this application are intended to allow the carrier signal to generate low phase noise in the frequency band of the first signal sent by the terminal device. For ease of understanding of the solutions provided in embodiments of this application, an example in which the terminal device is a transmitting end is used, to first describe a principle of reducing the phase noise in embodiments of this application.

The network device usually selects, for the terminal device based on a communication requirement, a frequency band and a frequency location for sending a signal. However, phase noise corresponding to a frequency location that is close to a center frequency of a carrier signal sent by a carrier signal source is greater than phase noise corresponding to a frequency location that is far away from the center frequency of the carrier signal sent by the carrier signal source. For example, a distance between a frequency and the center frequency of the carrier signal is sequentially [10, 100, 1 k, 10 k, 100 k, 1 MHz, 10 MHz, 40 MHz], and correspondingly, phase noise generated by the frequency is sequentially [-67, -103, -124, -138, -145, -151, -153, -157, -157] dBc/Hz. The carrier signal source refers to a device that provides the carrier signal, for example, the network device.

Therefore, in embodiments of this application, the frequency location at which the terminal device sends the signal (for example, referred to as the first signal) may be specified, so that the phase noise of the carrier signal is low in the frequency band of the first signal. For example, if the frequency location at which the first signal is sent is far away from the center frequency of the carrier signal sent by the carrier signal source, the phase noise of the carrier signal located in the frequency band of the first signal is reduced.

Embodiments of this application are applicable to any scenario in FIG. 2 to FIG. 5. The following describes the technical solutions provided in embodiments of this application by using an example in which embodiments of this application are applied to the architecture shown in FIG. 1. In the formulas in embodiments of this application, a variable ending with Linear indicates that the variable is a linear domain, and a variable ending with dB indicates that the variable is a logarithm domain.

The first network device may send the carrier signal to the terminal device, so that the terminal device sends the first signal. Accordingly, the terminal device receives the carrier signal from the first network device. After receiving the carrier signal, the terminal device sends the first signal. The first network device and a second network device may receive the first signal from the terminal device. In a possible scenario, the second network device may also send a carrier signal. Correspondingly, in addition to receiving the first signal from the terminal device, the first network device may further receive the carrier signal from the second network device. The carrier signal sent by the second network device causes extra phase noise, and causes interference to the first signal sent by the terminal device. Consequently, a signal to interference plus noise ratio of the signal received by the first network device is low, and demodulation performance or detection performance of the first signal is affected.

Therefore, in embodiments of this application, the terminal device may send the first signal at a frequency location far away from the center frequency of the carrier signal. Correspondingly, phase noise generated by the carrier signal within the frequency location range is also low, so that the signal to interference plus noise ratio of the signal received by the first network device can be improved. For example, the terminal device sends the first signal in the frequency band of the first signal, and the phase noise of the carrier signal in the frequency band of the first signal is less than a first threshold.

The first threshold is a power threshold of the phase noise, and may be determined by the first network device. A value of the first threshold is related to positioning precision, and different positioning precision may correspond to different SINRs and different signal powers. Therefore, the first threshold may be determined based on an SINR range and a signal power range that correspond to target positioning precision.

For example, the SINR satisfies Formula (1):

$$SINR = 10 \times \log 10(SigPowerLinear/(noiseLinear + PNLinear)) \qquad (1)$$

In Formula (1), SigPowerLinear is a signal power, noiseLinear is a noise power, and PNLinear is a phase noise power. SigPowerLinear may be usually obtained through calculation by using a link budget. For example, if a sending power of a signal is P1, and a path loss of a link is PL, a receiving power SigPowerdB of the signal is P1-PL. It may be understood that, linear and logarithmic conversion is performed between SigPowerLinear and SigPowerdB, that is, SigPowerdB=10*log10(sigPowerLinear).

A noise power NoisedB satisfies Formula (2):

$$NoisedB = -174 + 10\log 10(BW) + NF \qquad (2)$$

In Formula (2), BW is a single sideband bandwidth of a signal, and NF is a noise factor (noise factor).

An example in which a minimum SINR corresponding to the target positioning precision is SINRmin is used. In this case, a minimum value of the SINR that is obtained through calculation by substituting SigPowerdB, NoisedB, and the phase noise power PN into Formula (1) may be equal to SINRmin. It can be learned from Formula (1) that, larger PN indicates a smaller SINR. For example, the PN is greater than PNThr, the minimum value of the SINR may be SINRmin, and PNThr is the first threshold.

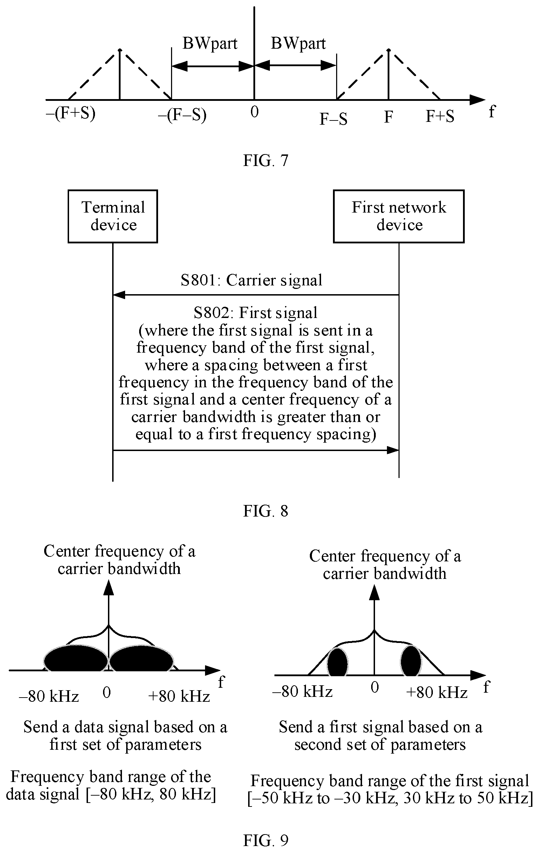

Embodiments of this application are intended to reduce the phase noise of the carrier signal in the frequency band of the first signal. For example, the phase noise of the carrier signal in the frequency band of the first signal is less than the first threshold. If the phase noise of the carrier signal in the frequency band of the first signal is less than the first threshold, a spacing between a frequency that is in the frequency band of the first signal and that is closest to the center frequency of the carrier bandwidth and the center frequency of the carrier bandwidth needs to be greater than or equal to a first frequency spacing BWpart. For ease of description, a frequency having a smallest frequency spacing from the center frequency of the carrier bandwidth in the frequency band of the first signal is referred to as a first frequency. As shown in FIG. 6, the first signal is obtained based on single sideband modulation, and [F-S, F+S] in FIG. 6 is the frequency band of the first signal. A spacing between a first frequency F-S in a frequency band of a single sideband signal and the center frequency of the carrier bandwidth is not less than BWpart. To be specific, a distance between the single sideband signal that is close to a side of the center frequency of the carrier bandwidth and a carrier center is not less than BWpart. As shown in FIG. 7, the first signal is obtained based on double sideband modulation, and [-(F+S), -(F-S)] and [F-S, F+S] in FIG. 7 are frequency bands of the first signal. A distance between a frequency location of each sideband (for example, F-S and -(F-S)) of a double sideband signal that is close to a side of the center frequency of the carrier bandwidth and a carrier center is not less than BWpart. "0" in FIG. 6 and FIG. 7 is the center frequency of the carrier bandwidth.

When an integral of a phase noise power PNIOTdB of signal leakage is less than the first threshold (namely, PNThr), phase noise of the signal is less than the first threshold. PNIOTdB satisfies Formula (3):

$$PNIOTdB=10log10((PNPowerLinear+NoiseLinear)/NoiseLinear) \qquad (3)$$

PNPowerLinear satisfies Formula (4):

$$PNPowerLinear=\int_{BWpart}^{BWpart+BW} PN(f)df \qquad (4)$$

In Formula (4), BW is a bandwidth of the first signal, and PN(f) is a phase noise roll-off function y, that is, y=PN(f), f is a frequency offset relative to the center frequency of the carrier bandwidth, and y is a relative value of the phase noise power relative to the carrier bandwidth.

PNPowerLinear needs to make PNIOTdB less than PNThrdB. According to Formula (4), it can be learned that, PNPowerLinear determined based on BWpart needs to make PNIOTdB less than PNThrdB.

At a location far away from the center frequency of the carrier bandwidth, roll-off of the phase noise power is slow. Therefore, Formula (4) may be approximate to PNPowerLinear≈PN(BWpart)×BW. According to Formula (2) and Formula (4), PNIOTdB≈10log10((PNPowerLinear)/NoiseLinear) = 10log10( PN(BWpart)) + 174 - NF - 10log10(BW)

If PNIOTdB<PNThrdB is required, BWpart needs to satisfy Formula (5):

$$10log10(PN(BWpart)) + 174 - NF - 10log10(BW) <PNThrdB \qquad (5).$$

It should be noted that, a frequency range corresponding to a power of PN(BWpart) needs to be converted to 1 Hz, to ensure that the frequency range corresponding to the calculated power is aligned.

The spacing between the first frequency in the frequency band of the first signal and the center frequency of the carrier bandwidth is greater than or equal to the first frequency spacing, which means that the first signal bandwidth is less than or equal to an absolute value of a difference between a half of the carrier bandwidth and the first frequency spacing. For example, the carrier bandwidth BW= 180 kHz, a half of the carrier bandwidth is 90 kHz, and the first signal bandwidth is less than or equal to or not greater than 90 kHz-BWpart. For example, BWpart is not less than 10 kHz.

In an implementation, the first network device may configure the frequency band of the first signal for the terminal device, where the spacing between the first frequency in the frequency band of the first signal and the center frequency of the carrier bandwidth is greater than or equal to the first frequency spacing BWpart. The terminal device sends the first signal on the frequency band of the positioning reference signal. Because the phase noise of the carrier signal in the first signal is less than the first threshold, the signal received by the first network device has a high signal to interference plus noise ratio, which facilitates demodulation or detection of the first signal. For example, the first signal is the positioning reference signal, and the signal received by the first network device has a high signal to interference plus noise ratio, so that positioning performance can be improved.

In another implementation, when sending the first signal, the terminal device may adjust the frequency band and a frequency offset of the positioning reference signal by introducing a line code. Based on this, the first network device may configure, for the terminal device, the line code used for sending of the first signal, so that the spacing between the first frequency in the frequency band of the first signal and the center frequency of the carrier bandwidth is greater than or equal to the first frequency spacing. For example, the first network device may configure, for the terminal device, a bit repetition count $R_{bit}$ and a Manchester encoding repetition count M that are used for sending of the first signal, that is, ($R_{bit}$, M). It should be understood that, a frequency spacing F between the center frequency of the first signal and a center frequency of a downlink carrier signal is $1/T/R_{bit}$, where T is level duration of one symbol of the first signal. One symbol of the first signal corresponds to one bit (for example, 0 or 1) before line code encoding. A bit before encoding is also referred to as an original bit. An original bit 0 corresponds to a low level. Relatively, an original bit 1 corresponds to a high level. The low level and the high level have a same length, and one symbol corresponds to one original bit. T is a duration length of a level corresponding to an original bit symbol. Duration of an original bit symbol may also be a sum of duration of the high level corresponding to the original bit and duration of the low level corresponding to the original bit. Alternatively, duration of an original bit symbol may also be a half or a part of duration of the high level corresponding to the original bit or the low level corresponding to the original bit.

A modulation data rate S used for sending of the first signal is $1/T/R_{bit}/M$. When an absolute value of F-S is greater than or equal to BWpart, the spacing between the first frequency in the frequency band of the first signal and the center frequency of the carrier bandwidth is greater than or equal to BWpart.

The absolute value of F-S is greater than or equal to BWpart, that is, $(R_{bit}, M)$ satisfies Formula (6):

$$1/T/R_{bit} - 1/T/R_{bit}/M \geq BWpart \qquad (6)$$

The first network device may configure proper $(R_{bit}, M)$ for the terminal device according to Formula (6).

For example, Table 1 shows a possible correspondence between T and the modulation rate S. It can be learned from Table 1 that, when T=6.25 μs, $R_{bit}$ is 4. When it is required that BWpart=10 kHz, an offset F between the center frequency of the first signal and the center frequency of the downlink carrier signal is 40 kHz. In this case, M is greater than or equal to 2.

Table 1

| T=6.25 μs/1/T=160 kHz | | Modulation rate S | | | | |
|---|---|---|---|---|---|---|
| $R_{bit}$ | F | M=1 | M=2 | M=4 | M=8 | M=16 |
| 64 | 2.5 kHz | 2.5 k | | | | |
| 32 | 5 kHz | 5 k | 2.5 k | | | |
| 16 | 10 kHz | 10k | 5 k | 2.5 k | | |
| 8 | 20 kHz | 20 k | 10 k | 5 k | 2.5 k | |
| 4 | 40 kHz | 40 k | 20 k | 10k | 5 k | 2.5 k |
| 1 | 160 kHz | | | 40 k | | |

The first network device may configure the frequency band and/or $(R_{bit}, M)$ of the first signal for the terminal device, so that the terminal device sends the first signal at a specific frequency location, to reduce the phase noise of the carrier signal from the second network device, and improve the signal to interference plus noise ratio of the signal received by the first network device. For example, the spacing between the first frequency in the frequency band of the first signal and the center frequency of the carrier bandwidth is greater than or equal to the first frequency spacing BWpart. For example, $1/T/R_{bit} - 1/T/R_{bit}/M \geq BWpart$.

For example, FIG. 8 is a schematic flowchart of a communication method according to an embodiment of this application.

S801: A first network device sends a carrier signal, and correspondingly, a terminal device receives the carrier signal.

The first network device may send the carrier signal to the terminal device, so that the terminal device sends a first signal.

S802: The terminal device sends the first signal, and correspondingly, the first network device receives the first signal.

The terminal device may send the first signal based on the carrier signal. Before the terminal device sends the first signal, the first network device may further configure, for the terminal device, a parameter used for sending of the first signal. For example, the first network device sends configuration information to the terminal device, and correspondingly, the terminal device receives the configuration information from the first network device, where the configuration information indicates a frequency band and/or $(R_{bit}, M)$ of the first signal.

The first signal may be a signal dedicated to positioning (namely, a positioning reference signal). When the terminal device needs to be positioned, in addition to configuring, for the terminal device, the parameter used for sending of the first signal, the first network device further needs to configure, for the terminal device, a parameter used for sending of a data signal, for example, a bandwidth of the data signal and/or $(R_{bit}, M)$ used for sending of the data signal. In other words, the first network device may configure two sets of parameters. One set of parameters (for example, a first set of parameters) is used by the terminal device to send the positioning reference signal, and the other set of parameters (for example, a second set of parameters) is used by the terminal device to send the data signal. The first set of parameters may include a positioning reference signal bandwidth, or may include $(R_{bit}, M)$. Similar to the first set of parameters, the second set of parameters may include the bandwidth of the data signal, or may include $(R_{bit}, M)$. For ease of differentiation, $R_{bit}$ in the first set of parameters is referred to as first $R_{bit}$, and M in the first set of parameters is first M; and $R_{bit}$ in the second set of parameters is referred to as second $R_{bit}$, and M in the first set of parameters is second M.

The first signal may be the data signal, and the first network device may configure the second set of parameters for the terminal device, for example, a frequency band of the data signal and/or $(R_{bit}, M)$ used for sending of the data signal. The spacing between the first frequency in the frequency band of the first signal and the center frequency of the carrier bandwidth is greater than or equal to the first frequency spacing. $1/T/R_{bit} - 1/T/R_{bit}/M$ is greater than or equal to the first frequency spacing. It should be noted that, if no positioning reference signal is defined, when the terminal device needs to be positioned, the first signal sent by the terminal device may also be used for positioning of the terminal device. In other words, during positioning, the first signal is used as the positioning reference signal.

If the first signal is a positioning reference signal dedicated to positioning, the first network device configures the first set of parameters and the second set of parameters. An example in which the first set of parameters includes the positioning reference signal bandwidth, and the second set of parameters includes the bandwidth of the data signal is used. In other words, the first network device configures the positioning reference signal bandwidth and the bandwidth of the data signal for the terminal device. In this case, a center frequency of the bandwidth of the data signal may be the same as or different from a center frequency of the positioning reference signal bandwidth.

For example, when the center frequency of the bandwidth of the data signal may be the same as the center frequency of the positioning reference signal bandwidth, the bandwidth of the data signal is greater than the positioning reference signal bandwidth. Optionally, it may be agreed that the center frequency of the bandwidth of the data signal may be the same as the center frequency of the positioning reference signal bandwidth. In this case, the first network device only needs to configure the bandwidth of the data signal and the positioning reference signal bandwidth.

For example, FIG. 9 is a diagram of a bandwidth of the data signal and a positioning reference signal bandwidth. In FIG. 9, an example in which a center frequency of a carrier obtained after frequency shift is $\pm 40$ kHz is used. If the positioning reference signal bandwidth is 40 kHz, a frequency range of a positioning reference signal is -50kHz to -30kHz and 30kHz to 50kHz. If the bandwidth of the data signal is 160 kHz, a frequency range of a data signal is -80 kHz to 80 kHz. A shadow part in FIG. 9 shows a frequency band range for sending the data signal and the positioning reference signal. It can be learned from FIG. 9 that, when a center frequency of the bandwidth of the data signal is the same as a center frequency of the positioning reference signal bandwidth, the bandwidth of the data signal may be greater than the positioning reference signal bandwidth. In this way, the data signal may be transmitted at a higher rate, to improve data transmission efficiency. In addition, the positioning reference signal bandwidth is narrow, a first frequency in a frequency band of the positioning reference signal is far away from the center frequency of the carrier bandwidth, and the positioning reference signal is less affected by the phase noise of the carrier signal, so that a positioning effect can be improved.

For example, when the center frequency of the bandwidth of the data signal may be different from the center frequency of the positioning reference signal bandwidth, a distance between the first frequency in the positioning reference signal bandwidth and the center frequency of the carrier bandwidth is greater than a distance between a second frequency in the bandwidth of the data signal and the center frequency of the carrier bandwidth. The second frequency is a frequency having a smallest frequency spacing from the center frequency of the carrier bandwidth in the data signal frequency band. For example, it may be agreed that the center frequency of the bandwidth of the data signal may also be different from the center frequency of the positioning reference signal bandwidth. In this case, the first network device only needs to configure the distance between the first frequency in the positioning reference signal bandwidth and the center frequency of the carrier bandwidth and the distance between the second frequency in the bandwidth of the data signal and the center frequency of the carrier bandwidth.

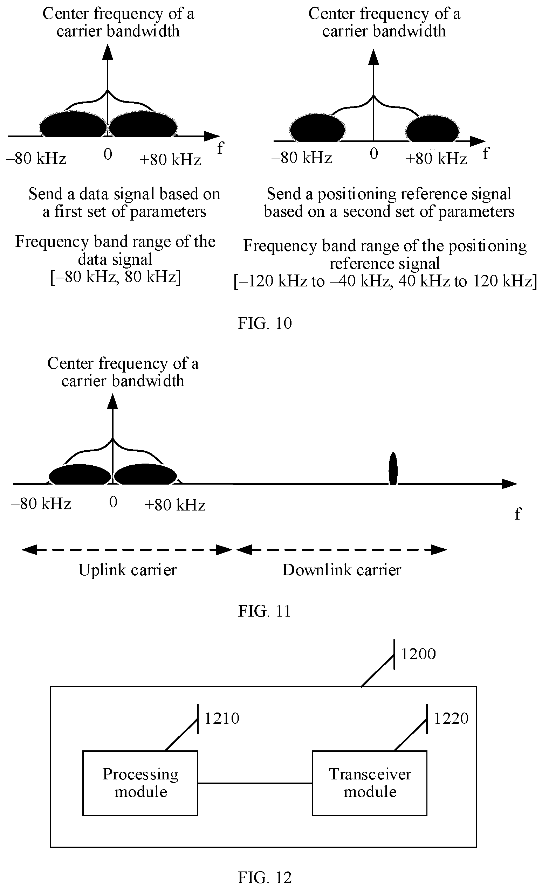

For example, FIG. 10 is another diagram of a bandwidth of the data signal and a positioning reference signal bandwidth. In FIG. 10, an example in which a center frequency of the bandwidth of the data signal is $\pm 40$ kHz, and a center frequency of the positioning reference signal bandwidth is $\pm 10$ kHz is used. If the positioning reference signal bandwidth is 40 kHz, a frequency range of a positioning reference signal is -120 kHz to -40 kHz and 40 kHz to 120 kHz. If the bandwidth of the data signal is 160 kHz, a frequency range of a data signal is -80 kHz to 80 kHz. A shadow part in FIG. 10 shows a frequency band range for sending the data signal and the positioning reference signal. It can be learned from FIG. 10 that, a distance between a first frequency in the positioning reference signal bandwidth and a center frequency of a carrier bandwidth is greater than a distance between a second frequency in the bandwidth of the data signal and the center frequency of the carrier bandwidth, so that impact of phase noise of a carrier signal on the positioning reference signal can be reduced.

An example in which a first set of parameters includes first $R_{bit}$ and first M, and a second set of parameters includes second $R_{bit}$ and second M is used. In other words, a first network device configures, for a terminal device, the first $R_{bit}$ and first M to be used for sending of the positioning reference signal, and the first network device configures, for the terminal device, the second $R_{bit}$ and second M to be used for sending of the data signal. The first $R_{bit}$ and the second $R_{bit}$ may be different, and the first M and the second M may also be different. For example, the first $R_{bit}$ is 4, and the first M is 4; and the second $R_{bit}$ is 4, and the first M is 1.

Optionally, the first set of parameters may further include another possible parameter used for sending of the positioning reference signal, and the second set of parameters may further include another possible parameter used for sending of the data signal. The first network device may separately configure the first set of parameters and the second set of parameters. Alternatively, the first set of parameters may be a subset of the second set of parameters. In this case, the first network device configures the second set of parameters, so that signaling overheads can be reduced. Alternatively, the first set of parameters and the second set of parameters have the same parameter, for example, $R_{bit}$. In this case, the first network device may configure the same parameter, to reduce signaling overheads.

The terminal device receives the carrier signal, and sends a first signal based on a frequency band of the first signal and/or ($R_{bit}$, M) that are/is configured by the first network device. Because the spacing between a frequency that is in the frequency band of the first signal and that is closest to the center frequency of the carrier bandwidth and the center frequency of the carrier bandwidth is greater than or equal to a first frequency spacing, the phase noise of the carrier signal in the frequency band of the first signal can be reduced, to reduce impact of the phase noise of the carrier signal on the first signal, and facilitate demodulation or detection of the first signal. Similarly, $1/T/R_{bit}$-$1/T/R_{bit}/M$ is greater than or equal to the first frequency spacing, so that phase noise of the carrier signal in the frequency band of the first signal may also be reduced, to reduce impact of the phase noise of the carrier signal on the first signal, and facilitate demodulation or detection of the first signal. For example, the first signal is the positioning reference signal, so that positioning performance can be improved.

As described above, embodiments of this application provide two solutions, to reduce impact of the phase noise of the carrier signal on the first signal. In a first solution, the first network device configures the frequency band of the first signal for the terminal device, and a spacing between a frequency that is in the frequency band of the first signal and that is closest to the center frequency of the carrier bandwidth and the center frequency of the carrier bandwidth is greater than or equal to the first frequency spacing. In a second solution, the first network device configures, for the terminal device, ($R_{bit}$, M) used for sending of the first signal, where $1/T/R_{bit}$-$1/T/R_{bit}/M$ is greater than or equal to the first frequency spacing.

In an alternative solution, the first network device may configure a carrier on which the terminal device sends a signal to be different from a carrier on which the first network device sends a signal to the terminal device. For ease of description, the carrier on which the terminal device sends the signal is referred to as an uplink carrier, and the carrier on which the first network device sends the signal is referred to as a downlink carrier. The first network device may configure a center frequency of the uplink carrier and a center frequency of the downlink carrier, or the first network device may configure a center frequency of the uplink carrier and an offset between the center frequency of the uplink carrier and a center frequency of the downlink carrier; or the first network device may configure a center frequency of the downlink carrier and an offset between the center frequency of the downlink carrier and a center frequency of the uplink carrier.

When the uplink carrier is different from the downlink carrier, the terminal device sends the positioning reference signal on the uplink carrier, that is, the terminal device sends the positioning reference signal on a carrier other than the downlink carrier. For example, FIG. 11 is a diagram of an uplink carrier and a downlink carrier. A terminal device sends a positioning reference signal on the uplink carrier, and a frequency location of the positioning reference signal is far away from a center frequency of a carrier bandwidth, so that impact of phase noise of a carrier signal on the positioning reference signal can be reduced.

In embodiments provided in this application, the methods provided in embodiments of this application are separately described from the perspective of interaction between the terminal device and the network device. To implement functions in the method provided in the foregoing embodiments of this application, the terminal device and the network device may include a hardware structure and/or a software module, and the foregoing functions are implemented in a form of a hardware structure, a software module, or a hardware structure plus a software module. Whether a function in the foregoing functions is performed by using the hardware structure, the software module, or the combination of the hardware structure and the software module depends on particular applications and design constraint conditions of the technical solutions.

An embodiment of this application further provides a communication apparatus. The following describes a communication apparatus for implementing the foregoing method in embodiments of this application with reference to the accompanying drawings.

FIG. 12 is a block diagram of a communication apparatus 1200 according to an embodiment of this application. The communication apparatus 1200 may include a processing module 1210 and a transceiver module 1220. Optionally, a storage unit may be further included. The storage unit may be configured to store instructions (code or a program) and/or data. The processing module 1210 and the transceiver module 1220 may be coupled to the storage unit. For example, the processing module 1210 may read the instructions (the code or the program) and/or the data in the storage unit, to implement a corresponding method. The foregoing modules may be disposed independently, or may be partially or completely integrated.

In some possible implementations, the communication apparatus 1200 can correspondingly implement behavior and functions of the terminal device in the foregoing method embodiments. The communication apparatus 1200 may be the terminal device, or may be a component (for example, a chip or a circuit) used in the terminal device, or may be a chip or a chip set in the terminal device, or a part of a chip that is configured to perform a related method function. For example, the transceiver module 1220 may perform steps such as S801 and S802 in FIG. 8, and/or is configured to support another process of the technology described in this specification. The processing module 1210 is configured to perform all operations performed by the terminal device in embodiments in FIG. 8 except the sending and receiving operations.

For example, the transceiver module 1220 is configured to receive a carrier signal. The processing module 1210 is configured to determine a frequency band of a first signal, where a spacing between a first frequency in the frequency band of the first signal and a center frequency of a carrier bandwidth is greater than or equal to a first frequency spacing, and the first frequency is a frequency having a smallest frequency spacing from the center frequency of the carrier bandwidth in the frequency band of the first signal. The transceiver module 1220 is further configured to send the first signal.

In an optional implementation, the transceiver module 1220 is further configured to send a data signal, where a bandwidth of the data signal is greater than a bandwidth of the first signal, and a center frequency of the bandwidth of the data signal is the same as a center frequency of the bandwidth of the first signal.

In an optional implementation, the transceiver module 1220 is further configured to send a data signal, where a center frequency of the bandwidth of the data signal is different from a center frequency of the bandwidth of the first signal, a distance between the first frequency in the bandwidth of the first signal and the center frequency of the carrier bandwidth is greater than a distance between a second frequency in the bandwidth of the data signal and the center frequency of the carrier bandwidth, and the second frequency is a frequency having a smallest frequency spacing from the center frequency of the carrier bandwidth in the data signal frequency band.

In an optional implementation, the first signal is sent by using a first bit repetition count and a first Manchester encoding repetition count, and the data signal is sent by using a second bit repetition count and a second Manchester encoding repetition count, where the first bit repetition count is different from the second bit repetition count; and/or the first Manchester encoding repetition count is different from the second Manchester encoding repetition count.

For details about related functions and related behaviors of the processing module 1210 and the transceiver module 1220, refer to related content in any one of the foregoing embodiments. Details are not described herein again.

In some possible implementations, the communication apparatus 1200 can correspondingly implement behavior and a function of the network device in the foregoing method embodiments. The communication apparatus 1200 may be the network device, or may be a component (for example, a chip or a circuit) used in the network device, or may be a chip or a chip set in the network device, or a part of a chip that is configured to perform a related method function. For example, the transceiver module 1220 may perform steps such as S801 and S802 in FIG. 8, and/or is configured to support another process of the technology described in this specification. The processing module 1210 is configured to perform all operations performed by the first network device in the embodiment shown in FIG. 8 except the sending and receiving operations.

For example, the transceiver module 1220 is configured to: send a carrier signal, and receive a first signal from the terminal device. A spacing between a first frequency in a frequency band of the first signal and a center frequency of a carrier bandwidth is greater than or equal to a first frequency spacing, and the first frequency is a frequency that is in the frequency band of the first signal and that is closest to the center frequency of the carrier bandwidth.

In an optional implementation, the transceiver module 1220 is further configured to receive a data signal, where a bandwidth of the data signal is greater than a bandwidth of the first signal, and a center frequency of the bandwidth of the data signal is the same as a center frequency of the bandwidth of the first signal.

In an optional implementation, the transceiver module 1220 is further configured to receive a data signal, where a center frequency of the bandwidth of the data signal is different from a center frequency of the bandwidth of the first signal, a distance between the first frequency in the bandwidth of the first signal and the center frequency of the carrier bandwidth is greater than a distance between a second frequency in the bandwidth of the data signal and the center frequency of the carrier bandwidth, and the second frequency is a frequency having a smallest frequency spacing from the center frequency of the carrier bandwidth in the data signal frequency band.

In an optional implementation, the first signal corresponds to a first bit repetition count and a first Manchester encoding repetition count, and the data signal corresponds to a second bit repetition count and a second Manchester encoding repetition count, where the first bit repetition count is different from the second bit repetition count; and/or the first Manchester encoding repetition count is different from the second Manchester encoding repetition count.

For details about related functions and related behaviors of the processing module 1210 and the transceiver module 1220, refer to related content in any one of the foregoing embodiments. Details are not described herein again.

It should be understood that, in embodiments of this application, the processing module 1210 may be implemented as a processor or a processor-related circuit component, and the transceiver module 1220 may be implemented as a transceiver or a transceiver-related circuit component or a communication interface.

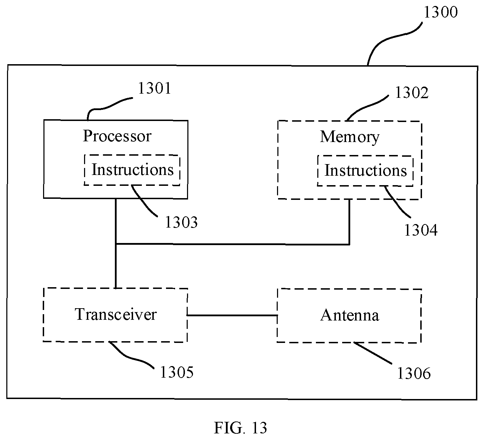

FIG. 13 is a block diagram of a communication apparatus 1300 according to an embodiment of this application. The communication apparatus 1300 may be a terminal device, and can implement functions of the terminal device in the methods provided in embodiments of this application. The communication apparatus 1300 may alternatively be an apparatus that can support the terminal device in implementing corresponding functions in the methods provided in embodiments of this application. The communication apparatus 1300 may be a chip system. In embodiments of this application, the chip system may include a chip, or may include a chip and another discrete component. For a specific function, refer to descriptions of the foregoing method embodiments. The communication apparatus 1300 may alternatively be a network device, and can implement functions of the network device in the methods provided in embodiments of this application. The communication apparatus 1300 may alternatively be an apparatus that can support the network device in implementing corresponding functions in the methods provided in embodiments of this application. The communication apparatus 1300 may be a chip system. In embodiments of this application, the chip system may include a chip, or may include a chip and another discrete component. For a specific function, refer to descriptions of the foregoing method embodiments.

The communication apparatus 1300 includes one or more processors 1301 that may be configured to implement or support the communication apparatus 1300 in implementing the functions of the terminal device in the methods provided in embodiments of this application. For details, refer to detailed descriptions in the method example. Details are not described herein again. The one or more processors 1301 may alternatively be configured to implement or support the communication apparatus 1300 in implementing the functions of the network device in the methods provided in embodiments of this application. For details, refer to detailed descriptions in the method example. Details are not described herein again. The processor 1301 may also be referred to as a processing unit or a processing module, and may implement a specific control function. The processor 1301 may be a general-purpose processor, a dedicated processor, or the like. For example, the processor 1301 includes a central processing unit, an application processor, a modem processor, a graphics processor, an image signal processor, a digital signal processor, a video codec processor, a controller, a memory, a neural network processor, and/or the like. The central processing unit may be configured to control the communication apparatus 1300, execute a software program, and/or process data. Different processors may be independent components, or may be integrated into one or more processors, for example, integrated into one or more application-specific integrated circuits.

Optionally, the communication apparatus 1300 includes one or more memories 1302, configured to store instructions 1304. The instructions may be run on the processor 1301, to cause the communication apparatus 1300 to perform the method described in the foregoing method embodiments. The memory 1302 and the processor 1301 may be separately disposed, or may be integrated together, or it may be considered that the memory 1302 is coupled to the processor 1301. The coupling in this embodiment of this application may be an indirect coupling or a communication connection between apparatuses, units, or modules in an electrical form, a mechanical form, or another form, and is used for information exchange between the apparatuses, the units, or the modules. The processor 1301 may operate in collaboration with the memory 1302. At least one of the at least one memory may be included in the processor. It should be noted that the memory 1302 is not necessary, and therefore is shown by using dashed lines in FIG. 13.

Optionally, the memory 1302 may further store data. The processor and the memory may be separately disposed, or may be integrated together. In this embodiment of this application, the memory 1302 may be a nonvolatile memory like a hard disk drive (hard disk drive, HDD) or a solid-state drive (solid-state drive, SSD), or may be a volatile memory (volatile memory) like a random access memory (random-access memory, RAM). The memory is any other medium that can carry or store expected program code in a form of instructions or a data structure and that can be accessed by a computer, but is not limited thereto. The memory in embodiments of this application may alternatively be a circuit or any other apparatus that can implement a storage function, and is configured to store the program instructions and/or the data.

Optionally, the communication apparatus 1300 may include instructions 1303 (which may also be referred to as code or programs sometimes). The instructions 1303 may be run on the processor, to cause the communication apparatus 1300 to perform the method described in the foregoing embodiments. The processor 1301 may store data.

Optionally, the communication apparatus 1300 may further include a transceiver 1305 and an antenna 1306. The transceiver 1305 may be referred to as a transceiver unit, a transceiver module, a transceiver machine, a transceiver circuit, a transceiver, an input/output interface, or the like, and is configured to implement a transceiver function of the communication apparatus 1300 through the antenna 1306.

The processor 1301 and the transceiver 1305 described in this application may be implemented on an integrated circuit (integrated circuit, IC), an analog IC, a radio frequency integrated circuit (radio frequency identification, RFID), a mixed-signal IC, an ASIC, a printed circuit board (printed circuit board, PCB), an electronic device, or the like. The communication apparatus described in this specification may be implemented by an independent device (for example, an independent integrated circuit or a mobile phone), or may be a part of a large device (for example, a module that may be embedded in another device). For details, refer to the foregoing descriptions about the terminal device and the network device. Details are not described herein again.

In a possible implementation, the communication apparatus 1300 can correspondingly implement behavior and functions of the terminal device in the foregoing method embodiments. The communication apparatus 1300 may be the terminal device, or may be a component (for example a chip or a circuit) used in the terminal device, or may be a chip or a chip set in the terminal device, or a part of a chip that is configured to perform a related method function.

For example, the transceiver 1305 is configured to receive a carrier signal. The processor 1301 is configured to determine a frequency band of a first signal, where a spacing between a first frequency in the frequency band of the first signal and a center frequency of a carrier bandwidth is greater than or equal to a first frequency spacing, and the first frequency is a frequency having a smallest frequency spacing from the center frequency of the carrier bandwidth in the frequency band of the first signal. The transceiver 1305 is further configured to send the first signal.

In an optional implementation, the transceiver 1305 is further configured to send a data signal, where a bandwidth of the data signal is greater than a bandwidth of the first signal, and a center frequency of the bandwidth of the data signal is the same as a center frequency of the bandwidth of the first signal.

In an optional implementation, the transceiver 1305 is further configured to send a data signal, where a center frequency of the bandwidth of the data signal is different from a center frequency of the bandwidth of the first signal, a distance between the first frequency in the bandwidth of the first signal and the center frequency of the carrier bandwidth is greater than a distance between a second frequency in the bandwidth of the data signal and the center frequency of the carrier bandwidth, and the second frequency is a frequency having a smallest frequency spacing from the center frequency of the carrier bandwidth in the data signal frequency band.

In an optional implementation, a first bit repetition count and a first Manchester encoding repetition count are used for the first signal, and a second bit repetition count and a second Manchester encoding repetition count are used for the data signal, where the first bit repetition count is different from the second bit repetition count; and/or the first Manchester encoding repetition count is different from the second Manchester encoding repetition count.

For details, refer to the related content in any foregoing embodiment. Details are not described herein again.

In some possible implementations, the communication apparatus 1300 can correspondingly implement behavior and a function of the network device in the foregoing method embodiments. The communication apparatus 1300 may be the network device, or may be a component (for example, a chip or a circuit) used in the network device, or may be a chip or a chip set in the network device, or a part of a chip that is configured to perform a related method function.

For example, the transceiver 1305 is configured to: send a carrier signal, and receive a first signal from the terminal device. A spacing between a first frequency in the frequency band of the first signal and a center frequency of a carrier bandwidth is greater than or equal to a first frequency spacing, and the first frequency is a frequency having a smallest frequency spacing from the center frequency of the carrier bandwidth in the frequency band of the first signal.

In an optional implementation, the transceiver 1305 is further configured to receive a data signal, where a bandwidth of the data signal is greater than a bandwidth of the first signal, and a center frequency of the bandwidth of the data signal is the same as a center frequency of the bandwidth of the first signal.

In an optional implementation, the transceiver 1305 is further configured to receive a data signal, where a center frequency of the bandwidth of the data signal is different from a center frequency of the bandwidth of the first signal, a distance between the first frequency in the bandwidth of the first signal and the center frequency of the carrier bandwidth is greater than a distance between a second frequency in the bandwidth of the data signal and the center frequency of the carrier bandwidth, and the second frequency is a frequency having a smallest frequency spacing from the center frequency of the carrier bandwidth in the data signal frequency band.

In an optional implementation, the first signal corresponds to a first bit repetition count and a first Manchester encoding repetition count, and the data signal corresponds to a second bit repetition count and a second Manchester encoding repetition count, where the first bit repetition count is different from the second bit repetition count; and/or the first Manchester encoding repetition count is different from the second Manchester encoding repetition count.

For details, refer to the related content in any foregoing embodiment. Details are not described herein again.

Optionally, the communication apparatus 1300 may further include one or more of the following components: a wireless communication module, an audio module, an external memory interface, an internal memory, a universal serial bus (universal serial bus, USB) interface, a power management module, an antenna, a speaker, a microphone, an input/output module, a sensor module, a motor, a camera, a display, or the like. It may be understood that, in some embodiments, the communication apparatus 1300 may include more or fewer components, some components are integrated, or some components are split. The components may be implemented by hardware, software, or a combination of software and hardware.

It should be noted that the communication apparatus in the foregoing embodiments may be a terminal device (or a network device), may be a circuit, may be a chip used in a terminal device (or a network device), or may be another combined device, component, or the like that has a function of a terminal (or a network device). When the communication apparatus is the terminal device (or the network device), the transceiver module may be the transceiver, and may include the antenna, a radio frequency circuit, and the like, and the processing module may be the processor, for example, a central processing module (central processing unit, CPU). When the communication apparatus is a component having a function of the terminal device (or the network device), the transceiver module may be a radio frequency unit, and the processing module may be the processor. When the communication apparatus is the chip system, the communication apparatus may be a field programmable gate array (field programmable gate array, FPGA), an application-specific integrated circuit (application-specific integrated circuit, ASIC), a system-on-a-chip (system-on-a-chip, SoC), a CPU, a network processor (network processor, NP), a digital signal processing circuit (digital signal processor, DSP), a micro controller unit (micro controller unit, MCU), a programmable controller (programmable logic device, PLD), or another integrated chip. The processing module may be a processor of the chip system. The transceiver module or a communication interface may be an input/output interface or an interface circuit of the chip system. For example, the interface circuit may be a code/data read/write interface circuit. The interface circuit may be configured to receive code instructions (where the code instructions are stored in the memory, and may be directly read from the memory, or may be read from the memory through another device) and transmit the code instructions to the processor. The processor may be configured to run the code instructions to perform the method in the foregoing method embodiments. For another example, the interface circuit may alternatively be a signal transmission interface circuit between a communication processor and the transceiver machine.

When the communication apparatus is a chip-type apparatus or circuit, the apparatus may include a transceiver unit and a processing unit. The transceiver unit may be an input/output circuit and/or a communication interface. The processing unit is an integrated processor, a microprocessor, or an integrated circuit.

An embodiment of this application further provides a communication system. Specifically, the communication system includes at least one terminal device and at least one network device. For example, the communication system includes a terminal device and a network device that are configured to implement related functions in FIG. 8. For details, refer to related descriptions in the method embodiment. The details are not described herein again.

An embodiment of this application further provides a computer-readable storage medium, including instructions. When the instructions are run on a computer, the computer is caused to perform the method performed by the terminal device in FIG. 8. Alternatively, when the instructions are run on the computer, the computer is caused to perform the method performed by a first network device in FIG. 8.

An embodiment of this application further provides a computer program product, including instructions. When the instructions are run on a computer, the computer is caused to perform the method performed by the terminal device in FIG. 8. Alternatively, when the instructions are run on the computer, the computer is caused to perform the method performed by a first network device in FIG. 8.

An embodiment of this application provides a chip system. The chip system includes a processor, and may further include a memory, configured to implement a function of the terminal device in the foregoing method, or configured to implement a function of the network device in the foregoing method. The chip system may include a chip, or may include a chip and another discrete component.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with illustrative logical blocks (illustrative logical blocks) described in embodiments disclosed in this specification and steps (steps) may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed operating process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

When the functions are implemented in the form of a software functional unit and sold or used as an independent product, the functions may be stored in a computer-readable storage medium. Based on this understanding, a part that essentially contributes to the technical solutions of this application or a part of the technical solutions may be embodied in a form of a software product. The computer software product is stored in a storage medium, and includes several instructions for enabling a computer device (which may be a personal computer, a server, a network device, or the like) to perform all or some steps of the methods in embodiments of this application. The foregoing storage medium includes any medium, for example, a USB flash drive, a removable hard disk, a read-only memory (read-only memory, ROM), a RAM, a magnetic disk, or an optical disc, that can store program code.

It is clear that a person skilled in the art can make various modifications and variations to this application without departing from the scope of this application. This application is intended to cover these modifications and variations of this application provided that they fall within the scope of protection defined by the following claims and their equivalent technologies.

**Claims**

1. A communication method, comprising:

   receiving a carrier signal; and
   sending a first signal, wherein a spacing between a first frequency in a frequency band of the first signal and a center frequency of a carrier bandwidth is greater than or equal to a first frequency spacing, and the first frequency is a frequency having a smallest frequency spacing from the center frequency of the carrier bandwidth in the frequency band of the first signal.

2. The method according to claim 1, wherein a bandwidth of the first signal is less than or equal to an absolute value of a difference between a half of the carrier bandwidth and the first frequency spacing.

3. The method according to claim 1 or 2, wherein a frequency spacing F between a center frequency of the first signal and a center frequency of a downlink carrier signal and a modulation data rate S used for the first signal satisfy: an absolute value of F-S is greater than or equal to the first frequency spacing.

4. The method according to claim 3, wherein

   F satisfies: $F=1/T/R_{bit}$; and
   S satisfies: $S=1/T/R_{bit}/M$, wherein
   T is level duration of one symbol of the first signal, $R_{bit}$ is a bit repetition count for the first signal, and M is a Manchester encoding repetition count for the first signal.

5. The method according to any one of claims 1 to 4, wherein the first signal is a positioning reference signal.

6. The method according to claim 5, wherein the method further comprises:
   sending a data signal, wherein a bandwidth of the data signal is greater than the bandwidth of the first signal, and a center frequency of the bandwidth of the data signal is the same as a center frequency of the bandwidth of the first signal.

7. The method according to claim 5, wherein the method further comprises:
   sending a data signal, wherein a center frequency of a bandwidth of the data signal is different from a center frequency of the bandwidth of the first signal, a distance between the first frequency in the bandwidth of the first signal and the center frequency of the carrier bandwidth is greater than a distance between a second frequency in the bandwidth of the data signal and the center frequency of the carrier bandwidth, and the second frequency is a frequency having a smallest frequency spacing from the center frequency of the carrier bandwidth in the bandwidth of the data signal.

8. The method according to claim 6 or 7, wherein the first signal is sent by using a first bit repetition count and a first Manchester encoding repetition count, and the data signal is sent by using a second bit repetition count and a second Manchester encoding repetition count, wherein the first bit repetition count is different from the second bit repetition count, and/or the first Manchester encoding repetition count is different from the second Manchester encoding repetition count.

9. A communication method, comprising:

   sending a carrier signal; and
   receiving a first signal from a terminal device, wherein a spacing between a first frequency in a frequency band of the first signal and a center frequency of a carrier is greater than or equal to a first frequency spacing, and the first frequency is a frequency having a smallest frequency spacing from the center frequency of the carrier in the frequency band of the first signal.

10. The method according to claim 9, wherein the first frequency spacing is determined based on a phase noise power of signal leakage.

11. The method according to claim 9 or 10, wherein phase noise of the carrier signal in the frequency band of the first signal is less than a first threshold.

12. The method according to claim 11, wherein the first signal is a positioning reference signal, and the first threshold is determined based on a minimum signal to interference plus noise ratio SINR corresponding to target positioning precision.

13. The method according to any one of claims 9 to 12, wherein a bandwidth of the first signal is less than or equal to an absolute value of a difference between a half of a carrier bandwidth and the first frequency spacing.

14. The method according to any one of claims 9 to 13, wherein a frequency spacing F between a center frequency of the first signal and a center frequency of a downlink carrier signal and a modulation data rate S used for sending the first signal satisfy: an absolute value of F-S is greater than or equal to the first frequency spacing.

15. The method according to claim 14, wherein

F satisfies: $F=1/T/R_{bit}$; and
S satisfies: $S=1/T/R_{bit}/M$, wherein
T is level duration of one symbol of the first signal, $R_{bit}$ is a bit repetition count used for the first signal, and M is a Manchester encoding repetition count used for the first signal.

16. The method according to any one of claims 9 to 15, wherein the method further comprises:
receiving a data signal, wherein a bandwidth of the data signal is greater than the bandwidth of the first signal, and a center frequency of the bandwidth of the data signal is the same as a center frequency of the bandwidth of the first signal.

17. The method according to any one of claims 9 to 15, wherein the method further comprises:
receiving a data signal, wherein a center frequency of a bandwidth of the data signal is different from a center frequency of the bandwidth of the first signal, a distance between a first frequency in the bandwidth of the first signal and a center frequency of the carrier bandwidth is greater than a distance between a second frequency in the bandwidth of the data signal and the center frequency of the carrier bandwidth, and the second frequency is a frequency having a smallest frequency spacing from the center frequency of the carrier bandwidth in the data signal frequency band.

18. The method according to claim 16 or 17, wherein the first signal corresponds to a first bit repetition count and a first Manchester encoding repetition count, and the data signal corresponds to a second bit repetition count and a second Manchester encoding repetition count, wherein the first bit repetition count is different from the second bit repetition count; and/or the first Manchester encoding repetition count is different from the second Manchester encoding repetition count.

19. A communication method, comprising:

sending, by a network device, a carrier signal; and
receiving, by a label, the carrier signal, and sending a first signal, wherein a spacing between a first frequency in a frequency band of the first signal and a center frequency of a carrier is greater than or equal to a first frequency spacing, and the first frequency is a frequency having a smallest frequency spacing from the center frequency of the carrier in the frequency band of the first signal.

20. The method according to claim 19, wherein the first frequency spacing is determined based on a phase noise power of signal leakage.

21. The method according to claim 19 or 20, wherein phase noise of the carrier signal in the frequency band of the first signal is less than a first threshold.

22. The method according to claim 21, wherein the first signal is a positioning reference signal, and the first threshold is determined based on a minimum signal to interference plus noise ratio SINR corresponding to target positioning precision.

23. A communication apparatus, comprising a processing module and a transceiver module, wherein

   the transceiver module is configured to receive a carrier signal and send a first signal, wherein a spacing between a first frequency in a frequency band of the first signal and a center frequency of a carrier bandwidth is greater than or equal to a first frequency spacing, and the first frequency is a frequency having a smallest frequency spacing from the center frequency of the carrier bandwidth in the frequency band of the first signal; and
   the processing module is configured to determine a frequency band of the positioning reference signal.

24. The apparatus according to claim 23, wherein a bandwidth of the first signal is less than or equal to an absolute value of a difference between a half of the carrier bandwidth and the first frequency spacing.

25. The apparatus according to claim 23 or 24, wherein a frequency spacing F between a center frequency of the first signal and a center frequency of a downlink carrier signal and a modulation data rate S used for the first signal satisfy: an absolute value of F-S is greater than or equal to the first frequency spacing.

26. The apparatus according to claim 25, wherein

   F satisfies: $F=1/T/R_{bit}$; and
   S satisfies: $S=1/T/R_{bit}/M$, wherein
   T is level duration of one symbol of the first signal, $R_{bit}$ is a bit repetition count for the first signal, and M is a Manchester encoding repetition count for the first signal.

27. The apparatus according to any one of claims 23 to 26, wherein the first signal is the positioning reference signal.

28. The apparatus according to claim 27, wherein the transceiver module is further configured to:
   send a data signal, wherein a bandwidth of the data signal is greater than the bandwidth of the first signal, and a center frequency of the bandwidth of the data signal is the same as a center frequency of the bandwidth of the first signal.

29. The apparatus according to claim 27, wherein the transceiver module is further configured to:
   send a data signal, wherein a center frequency of a bandwidth of the data signal is different from a center frequency of the bandwidth of the first signal, a distance between the first frequency in the bandwidth of the first signal and the center frequency of the carrier bandwidth is greater than a distance between a second frequency in the bandwidth of the data signal and the center frequency of the carrier bandwidth, and the second frequency is a frequency having a smallest frequency spacing from the center frequency of the carrier bandwidth in the bandwidth of the data signal.

30. The apparatus according to claim 28 or 29, wherein the first signal is sent by using a first bit repetition count and a first Manchester encoding repetition count, and the data signal is sent by using a second bit repetition count and a second Manchester encoding repetition count, wherein the first bit repetition count is different from the second bit repetition count; and/or the first Manchester encoding repetition count is different from the second Manchester encoding repetition count.

31. A communication apparatus, comprising a processing module and a transceiver module, wherein

   the transceiver module is configured to send a carrier signal and receive a first signal, wherein a spacing between a first frequency in a frequency band of the first signal and a center frequency of a carrier bandwidth is greater than or equal to a first frequency spacing, and the first frequency is a frequency having a smallest frequency spacing from the center frequency of the carrier bandwidth in the frequency band of the first signal; and
   the processing module is configured to determine a frequency band of the positioning reference signal.

32. The apparatus according to claim 31, wherein the first frequency spacing is determined based on a phase noise power of signal leakage.

33. The apparatus according to claim 31 or 32, wherein phase noise of the carrier signal in the frequency band of the first signal is less than a first threshold.

34. The apparatus according to claim 33, wherein the first signal is the positioning reference signal, and the first threshold is determined based on a minimum signal to interference plus noise ratio SINR corresponding to target positioning precision.

35. The apparatus according to any one of claims 31 to 34, wherein a bandwidth of the first signal is less than or equal to an absolute value of a difference between a half of the carrier bandwidth and the first frequency spacing.

36. The apparatus according to any one of claims 31 to 35, wherein a frequency spacing F between a center frequency of the first signal and a center frequency of a downlink carrier signal and a modulation data rate S used for sending the first signal satisfy: an absolute value of F-S is greater than or equal to the first frequency spacing.

37. The apparatus according to claim 36, wherein

   F satisfies: $F=1/T/R_{bit}$; and
   S satisfies: $S=1/T/R_{bit}/M$, wherein
   T is level duration of one symbol of the first signal, $R_{bit}$ is a bit repetition count used for the first signal, and M is a Manchester encoding repetition count used for the first signal.

38. The apparatus according to any one of claims 31 to 37, wherein the transceiver module is further configured to: receive a data signal, wherein a bandwidth of the data signal is greater than the bandwidth of the first signal, and a center frequency of the bandwidth of the data signal is the same as a center frequency of the bandwidth of the first signal.

39. The apparatus according to any one of claims 31 to 37, wherein the transceiver module is further configured to: receive a data signal, wherein a center frequency of a bandwidth of the data signal is different from a center frequency of the bandwidth of the first signal, a distance between the first frequency in the bandwidth of the first signal and the center frequency of the carrier bandwidth is greater than a distance between a second frequency in the bandwidth of the data signal and the center frequency of the carrier bandwidth, and the second frequency is a frequency having a smallest frequency spacing from the center frequency of the carrier bandwidth in the data signal frequency band.

40. The apparatus according to claim 38 or 39, wherein the first signal corresponds to a first bit repetition count and a first Manchester encoding repetition count, and the data signal corresponds to a second bit repetition count and a second Manchester encoding repetition count, wherein the first bit repetition count is different from the second bit repetition count; and/or the first Manchester encoding repetition count is different from the second Manchester encoding repetition count.

41. A communication apparatus, wherein the communication apparatus comprises a processor and a memory, the memory is configured to store a computer program, and the processor is configured to execute the computer program stored in the memory, to cause the communication apparatus to perform the method according to any one of claims 1 to 8, or to cause the communication apparatus to perform the method according to any one of claims 9 to 18.

42. A communication system, wherein the communication system comprises a terminal apparatus and a network apparatus, the terminal apparatus is configured to implement the method according to any one of claims 1 to 8, and the network apparatus is configured to implement the method according to any one of claims 9 to 18.

43. A communication system, comprising a network device and a label, wherein

   the network device is configured to send a carrier signal; and
   the label is configured to receive the carrier signal, and send a first signal, wherein a spacing between a first frequency in a frequency band of the first signal and a center frequency of a carrier is greater than or equal to a first frequency spacing, and the first frequency is a frequency having a smallest frequency spacing from the center frequency of the carrier in the frequency band of the first signal.

44. The system according to claim 43, wherein the first frequency spacing is determined based on a phase noise power of signal leakage.

45. The system according to claim 43 or 44, wherein phase noise of the carrier signal in the frequency band of the first signal is less than a first threshold.

46. The system according to claim 45, wherein the first signal is a positioning reference signal, and the first threshold is determined based on a minimum signal to interference plus noise ratio SINR corresponding to target positioning precision.

**47.** A computer-readable storage medium, wherein the computer-readable storage medium stores a computer program; and when the computer program is executed by a computer, the computer is caused to perform the method according to any one of claims 1 to 8, or the computer is caused to perform the method according to any one of claims 9 to 18.

**48.** A computer program product, wherein the computer program product stores a computer program; and when the computer program is executed by a computer, the computer is caused to perform the method according to any one of claims 1 to 8, or the computer is caused to perform the method according to any one of claims 9 to 18.

Network
device 1

Network
device 2

α1

α2

Terminal device

FIG. 1

Acknowledgment
message

Network
device

Terminal
device

Random
access

Data signal+positioning
reference signal

FIG. 2

Network device — Configuration information

Terminal device — Positioning reference signal

FIG. 3

Network device — Acknowledgment message

Terminal device — Random access — Data signal

FIG. 4

Network device — Configuration information

Terminal device — Data signal

FIG. 5

BWpart

0    F−S    F    F+S    f

FIG. 6

FIG. 7

FIG. 8

Center frequency of a carrier bandwidth

−80 kHz    0    +80 kHz    f

Send a data signal based on a first set of parameters

Frequency band range of the data signal [−80 kHz, 80 kHz]

Center frequency of a carrier bandwidth

−80 kHz    0    +80 kHz    f

Send a first signal based on a second set of parameters

Frequency band range of the first signal [−50 kHz to −30 kHz, 30 kHz to 50 kHz]

FIG. 9

Center frequency of a
carrier bandwidth

–80 kHz     0   +80 kHz  f

Send a data signal based on
a first set of parameters

Frequency band range of the
data signal
[–80 kHz, 80 kHz]

Center frequency of a
carrier bandwidth

–80 kHz     0   +80 kHz  f

Send a positioning reference signal
based on a second set of parameters

Frequency band range of the positioning
reference signal
[–120 kHz to –40 kHz, 40 kHz to 120 kHz]

FIG. 10

Center frequency of a
carrier bandwidth

–80 kHz     0   +80 kHz

f

Uplink carrier        Downlink carrier

FIG. 11

1200

1210        1220

Processing
module

Transceiver
module

FIG. 12

1300

1301

Processor

Instructions

1303

1302

Memory

Instructions

1304

Transceiver

1305

Antenna

1306

FIG. 13

## INTERNATIONAL SEARCH REPORT

| International application No. |
| --- |
| **PCT/CN2023/136407** |

**A.    CLASSIFICATION OF SUBJECT MATTER**

H04W 64/00(2009.01)i

According to International Patent Classification (IPC) or to both national classification and IPC

**B.    FIELDS SEARCHED**

Minimum documentation searched (classification system followed by classification symbols)

IPC：H04W

Documentation searched other than minimum documentation to the extent that such documents are included in the fields searched

Electronic data base consulted during the international search (name of data base and, where practicable, search terms used)

CNTXT, ENTXTC, VEN, CNKI, 3GPP: 载波, 频率, 频点, 中心, 差, 间隔, 间距, 距离, 超过, 大于, 干扰, 噪声, 每个, 任一, 任意, 最小, carrier, frequency, central, difference, distance, interference, noise

**C.    DOCUMENTS CONSIDERED TO BE RELEVANT**

| Category* | Citation of document, with indication, where appropriate, of the relevant passages | Relevant to claim No. |
| --- | --- | --- |
| X | CN 114286323 A (UNISOC (CHONGQING) TECHNOLOGIES CO., LTD.) 05 April 2022 (2022-04-05)<br>    description, paragraphs [0002]-[0092] | 1-48 |
| A | CN 115088358 A (BEIJING XIAOMI MOBILE SOFTWARE CO., LTD.) 20 September 2022 (2022-09-20)<br>    entire document | 1-48 |
| A | CN 101365217 A (BEIJING UNIVERSITY OF POSTS AND TELECOMMUNICATIONS) 11 February 2009 (2009-02-11)<br>    entire document | 1-48 |
| A | CN 102638304 A (ZTE CORP.) 15 August 2012 (2012-08-15)<br>    entire document | 1-48 |
| A | US 2021311156 A1 (PARSONS CORPORATION) 07 October 2021 (2021-10-07)<br>    entire document | 1-48 |

☐ Further documents are listed in the continuation of Box C.      ☑ See patent family annex.

| *    Special categories of cited documents: | "T"   later document published after the international filing date or priority date and not in conflict with the application but cited to understand the principle or theory underlying the invention |
| --- | --- |
| "A"   document defining the general state of the art which is not considered to be of particular relevance | |
| "D"   document cited by the applicant in the international application | "X"   document of particular relevance; the claimed invention cannot be considered novel or cannot be considered to involve an inventive step when the document is taken alone |
| "E"   earlier application or patent but published on or after the international filing date | |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | "&"   document member of the same patent family |
| "P"   document published prior to the international filing date but later than the priority date claimed | |

| Date of the actual completion of the international search | Date of mailing of the international search report |
| --- | --- |
| **04 February 2024** | **07 March 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

| International application No. |
| --- |
| **PCT/CN2023/136407** |

| Patent document cited in search report | | | Publication date (day/month/year) | Patent family member(s) | | | Publication date (day/month/year) |
| --- | --- | --- | --- | --- | --- | --- | --- |
| CN | 114286323 | A | 05 April 2022 | None | | | |
| CN | 115088358 | A | 20 September 2022 | None | | | |
| CN | 101365217 | A | 11 February 2009 | None | | | |
| CN | 102638304 | A | 15 August 2012 | None | | | |
| US | 2021311156 | A1 | 07 October 2021 | WO | 2021207326 | A1 | 14 October 2021 |
| | | | | US | 11619700 | B2 | 04 April 2023 |

Form PCT/ISA/210 (patent family annex) (July 2022)

**EP 4 637 231 A1**

**Patent documents cited in the description**

- CN 202211724557